Europäisches Patentamt

European Patent Office

Office européen des brevets

(11) Veröffentlichungsnummer: **0 292 022**
**A2**

(12) **EUROPÄISCHE PATENTANMELDUNG**

(21) Anmeldenummer: **88108261.4**

(22) Anmeldetag: **24.05.88**

(51) Int. Cl.⁴: **B23B 31/26**

(30) Priorität: **22.05.87 DE 3717385**

(43) Veröffentlichungstag der Anmeldung:
**23.11.88 Patentblatt 88/47**

(84) Benannte Vertragsstaaten:
**AT BE CH DE ES FR GB GR IT LI LU NL SE**

(71) Anmelder: **ENTWICKLUNGSZENTRUM FÜR ZERSPANUNGSTECHNIK GMBH & CO. KG**
**An den Stegmatten 67**
**D- 7630 Lahr 17(DE)**

(72) Erfinder: **Blust, Rudolf**
**Schäfligraben 11**
**CH-8304 Zürich-Wallisellen(CH)**

(74) Vertreter: **Patentanwälte Grünecker, Kinkeldey, Stockmair & Partner**
**Maximilianstrasse 58**
**D-8000 München 22(DE)**

(54) **Betätigungsvorrichtung.**

(57)
1. Hydraulische Betätigungsvorrichtung, insbesondere zur Betätigung einer Kupplungs- und Spannvorrichtung für die lösbare Verbindung eines Werkzeugs mit einer Arbeitsspindel.

2.1. Der Erfindung liegt die Aufgabe zugrunde, eine Betätigungsvorrichtung zu schaffen, welche insbesondere eine automatische Betätigung einer Kupplungs- und Spannvorrichtung der obenbeschriebenen Art ermöglicht.

2.2. Erfindungsgemäß sind in einem Gehäuse koaxial zueinander zwei zueinander verschiebbare Kolben vorgesehen, wobei zwishen den Kolben und dem Gehäuse drei voneinander unabhängige Arbeitskammern ausgebildet sind, so daß bei wahlweiser Druckbeaufschlagung dieser Arbeitskammern eine schrittweise Verschiebung der Kolben und damit eine schrittweise Verschiebung von Betätigungselementen möglich ist.

2.3. Die Erfindung ist bei allen Arten von Betätigungsvorrichtungen verwendbar, bei welchen einzelne Arbeitsschritte in definierter Abfolge ausgeführt werden müssen.

FIG. 1

## Betätigungsvorrichtung

Die Erfindung bezieht sich auf eine hydraulische Betätigungsvorrichtung, insbesondere zur Betätigung einer Kupplungs- und Spannvorrichtung für die lösbare Verbindung eines Werkzeugs mit einer Arbeitsspindel und auf ein Verfahren zur Betätigung einer Kupplungs- und Spannvorrichtung für die lösbare Verbindung eines Werkzeugs mit einer Arbeitsspindel.

Bei modernen Werkzeugmaschinen, insbesondere bei komplexen Fertigungssystemen oder Transferstraßen werden Werkzeuge verwendet, welche durch automatische Wechseleinrichtungen von der jeweiligen Arbeitsspindel entnommen werden bzw. in diese eingesetzt werden. Weiterhin sind die Werkzeuge üblicherweise so ausgebildet, daß die an ihnen gelagerten Schneiden durch axiale Verschiebung einer Betätigungsstange in radialer Richtung einstellbar sind. Es ist somit erforderlich, das jeweilige Werkzeug zum einen so mit der Arbeitsspindel zu verbinden, daß das Werkzeug relativ zur Arbeitsspindel zentriert ist und drehfest in der Arbeitsspindel gespannt ist und daß zum anderen die üblicherweise in der Arbeitsspindel gelagerte Betätigungsstange für die radiale Einstellung der Schneiden des Werkzeugs mit einer Einstellvorrichtung im Inneren des Werkzeugs verbunden wird. Es sind somit beim automatischen Werkzeugwechsel nacheinander und in geordneter zeitlicher Reihenfolge mehrere Arbeitsschritte auszuführen, nämlich sowohl das Spannen bzw. Entspannen des Werkzeugs als auch das Verbinden der Betätigungsstange bzw. das Lösen derselben. Diese Arbeitsschritte müssen zeitlich aufeinander abgestimmt so ausgeführt werden, daß eine Fehlbedienung oder Fehlfunktion ausgeschlossen ist. Weiterhin müssen diese Betätigungsschritte in möglichst einfacher Weise durchführbar sein, um den Aufwand zur Kontrolle der jeweiligen Arbeitsschritte möglichst gering zu halten.

Bei bekannten Werkzeugmaschinen ist bei eingesetztem und gespanntem Werkzeug, d.h. in einem betriebsbereiten Zustand die Arbeitsspindel drehfest mit der Betätigungsstange für die radiale Einstellung des Werkzeugs verbunden. Die Verbindung der Betätigungsstange mit der Verstelleinrichtung des Werkzeugs erfolgt üblicherweise dadurch, daß eine Kupplung vorgesehen ist, welche in einer vorgegebenen Winkelstellung zwischen dem Werkzeug und der Betätigungsstange lösbar ist und welche bei einer Verdrehung des Werkzeugs relativ zu der Betätigungsstange um einen vorgegebenen Winkelbetrag fixiert ist.

Der Erfindung liegt die Aufgabe zugrunde, eine Betätigungsvorrichtung der eingangs genannten Art und ein Verfahren zur Betätigung einer Kupplungs- und Spannvorrichtung zu schaffen, welche bei einfachem Aufbau und betriebssicherer Anwendbarkeit die aufeinanderfolgende Durchführung mehrerer Arbeitsschritte ermöglicht, wobei die Arbeitsschritte selbsttätig ausführbar sind und wobei auf die Verwendung weiterer Kontroll- oder Steuervorrichtungen verzichtet werden kann.

Hinsichtlich der Betätigungsvorrichtung wird die Aufgabe gelöst durch einen ersten und einen zweiten koaxial zueinander in einem Gehäuse verschiebbar angeordneten Kolben, eine erste zwischen dem ersten Kolben und dem Gehäuse ausgebildete Arbeitskammer, eine zweite zwischen dem ersten und dem zweiten Kolben in dem Gehäuse ausgebildete Arbeitskammer und eine dritte zwischen dem zweiten Kolben und dem Gehäuse ausgebildete Arbeitskammer, wobri die Arbeitskammern gegeneinander druckdicht abgedichtet sind, wobei der erste Kolben einen geringeren Verschiebeweg als der zweite Kolben aufweist und wobei der erste Kolben bei dessen Verschiebung durch Druckbeaufschlagung der ersten Arbeitskammer zur Verschiebung des zweiten Kolbens an diesen in Anlage bringbar ist.

Die erfindungsgemäße hydraulische Betätigungsvorrichtung weist eine Reihe erheblicher Vorteile auf. Durch die Anordnung zweier Kolben und durch das Ausbilden dreier Arbeitskammern ist es möglich, durch Druckbeaufschlagung einzelner Arbeitskammern eine gezielte Verschiebung der Kolben in dem Gehäuse zu erreichen. Der jeweilige Verschiebeweg der Kolben ist durch die Dimensionierung des Gehäuses und/oder der Arbeitskammern vorbestimmbar, so daß bei einer Druckbeaufschlagung einer der drei Arbeitskammern sichergestellt ist, daß der oder die Kolben sich in vorgegebener Richtung und den vorgegebenen Verschiebeweg in dem Gehäuse verschieben. Die erfindungsgemäße hydraulische Betätigungsvor richtung ist in besonders einfacher Weise bei automatisierbaren Einrichtungen oder Vorrichtungen verwendbar, da es für eine Betätigung der hydraulischen Betätigungsvorrichtung lediglich erforderlich ist, eine der Arbeitskammern mit Druck zu beaufschlagen, was in einfacher Weise durch Öffnen oder Schließen eines Ventiles oder Absperrorgans vorgenommen werden kann. Es ist aber nicht erforderlich, zusätzliche Vorrichtungen oder Einrichtungen zur Steuerung des Verschiebewegs der Kolben zu verwenden.

Ein besonderer Vorteil der erfindungsgemäßen Betätigungsvorrichtung ist auch dadurch gegeben, daß der erste Kolben einen geringeren Verschiebeweg als der zweite Kolben aufweist und daß der erste Kolben bei seiner Verschiebung in Anlage an den zweiten Kolben bringbar ist, um diesen zusammen mit dem ersten Kolben zu verschieben. Es ist somit möglich, durch wahlweise Druckbeaufschlagung der ersten oder der zweiten Arbeitskammer den zweiten Kolben zweistfig zu verschieben, d.h. zunächst um den Verschiebeweg des ersten Kolbens und dann um den restlich verbleibenden Verschiebeweg des zweiten Kolbens. Es ist aber auch möglich, durch Druckbeaufschlagung nur der zweiten Arbeitskammer nur den zweiten Kolben um seinen gesamten Verschiebeweg zu verschieben. Ein weiterer Vorteil der erfindungsgemäßen hydraulischen Betätigungsvorrichtung besteht darin, daß durch Druckbeaufschlagung der dritten Arbeitskammer beide Kolben in ihre Ausgangsstellung zurückschiebbar sind. Durch eine einfache Ja/Nein-Zuordnung von Druck in den jeweiligen Arbeitskammern läßt sich somit der jeweilige Verschiebeweg der Kolben auf einfachste Weise steuern. Die beiden Kolben können in vorteilhafter Weise mit Kolbenstangen verbunden sein, deren Enden sich aus dem Gehäuse heraus erstrecken und zur Betätigung einer Kupplungs- und/oder Spannvorrichtung für die lösbare Verbindung eines Werkzeugs mit einer Arbeitsspindel dienen können. Da durch eine Druckbeaufschlagung der Arbeitskammern jeweils eine genau vorherbestimmbare Verschiebung der Kolben erfolgt, ist es auf besonders einfache Weise möglich, eine Kupplungs-oder Spannvorrichtung mittels der Kolbenstange zu betätigen. Dabei erweist es sich insbesondere auch als günstig, daß es nicht möglich ist, daß die Kolben nur über einen Teilbereich ihres Verschiebeweges verschoben werden, so daß es auch nicht möglich ist, daß die Kupplungs- oder Spannvorrichtung nur teilweise betätigt wird.

Eine besonders vorteilhafte Ausgestaltung der erfindungsgemäßen Betätigungsvorrichtung ist dadurch gegeben, daß der erste und der zweite Kolben koaxial zur Drehachse der Arbeitsspindel angeordnet sind. Dies ermöglicht zum einen eine besonders betriebssichere Betätigbarkeit der Betätigungsvorrichtung, da auf zusätzliche Getriebe oder Hebelübersetzungen verzichtet werden kann. Weiterhin ist es somit möglich, die Betätigungsvorrichtung platzsparend zu dimensionieren und sie auf platzsparende Weise an einer Werkzeugmaschine anzuordnen.

Eine günstige Weiterbildung ist auch dadurch gegeben, daß der zweite Kolben drehfest in dem Gehäuse gelagert ist und mit einer Kolbenstange verbunden ist, deren freies Ende durch Verschieben des ersten Kolbens aus einer Ausgangslage des ersten und des zweiten Kolbens drehfest mit einer koaxial im Inneren der Arbeitsspindel angeordneten Betätigungsspindel für eine Schneidenverstelleinrichtung des Werkzeugs kuppelbar ist. Auf diese Weise kann die Betätigungsstange , welche beim Betrieb der Werkzeugsmaschine drehfest mit der Arbeitsspindel verbunden ist und sich mit gleicher Drehzahl wie diese dreht, drehfest zu dem Gehäuse festgelegt werden, um nachfolgend eine Relativverdrehung zwischen dem Werkzeug und der Betätigungsstange vorzunehmen, um das Werkzeug von der Betätigungsspindel zu lösen. Dabei erweist es sich als vorteilhaft, da̅ zum Kuppeln eine Klauenkupplung vorgesehen ist.

Eine weitere vorteilhafte Weiterbildung ist dadurch gegeben, daß durch Verschieben des ersten Kolbens eine drehfeste Kupplung zwischen der Arbeitsspindel und der Befestigungsspindel lösbar ist, wobei in vorteilhafter Weise diese Kupplung in Form einer Klauenkupplung ausgebildet ist. Bei einer Druckbeaufschlagung der ersten Arbeitskammer wird somit sowohl der erste Kolben als auch der zweite Kolben verschoben und es erfolgt somit sowohl eine Lösung der drehfesten Kupplung zwischen der Betätigungstange und der Arbeitsspindel als auch eine drehfeste Fixierung der Betätigungsstange . Nach Durchführung dieser Arbeitsschritte ist es nunmehr möglich, die Arbeitsspindel relativ zu der Betätigungs stange zu verdrehen. Da das Werkzeug weiterhin in einer Aufnahmeausnehmung der Arbeitsspindel gespannt ist, führt eine Relativverdrehung zwischen der Arbeitsspindel und der Betätigungsstange zwangsläufig zu einer Relativverdrehung zwischen dem Werkzeug und der Betätigungsstange , wodurch die zwischen diesen Teilen vorgesehene Kupplung in einen lösbaren Zustand überführt wird.

Eine weitere vorteilhafte Ausgestaltung ist dadurch gegeben, daß bei Druckbeaufschlagung der zweiten Arbeitskammer der zweite Kolben zum Lösen einer Werkzeugspannvorrichtung verschiebbar ist. Es ist somit zum einen möglich, durch die obenbeschriebene Verschiebung des ersten Kolbens durch Druckbeaufschlagung der ersten Arbeitskammer eine Drehverbindung zwischen der Arbeitsspindel und der Betätigungsstange zu lösen und letztere drehfest zu fixieren. Bei einer daraufhin erfolgenden Druckbeaufschlagung der zweiten Arbeitskammer wird die Werkzeugspannvorrichtung gelöst. Da eine Verschiebung des ersten Kolbens zugleich auch zu einer Verschiebung des zweiten Kolbens führt, ist sichergestellt, daß die Spannvorrichtung für das Werkzeug nicht gelöst werden kann, bevor eine drehfeste Verbindung zwischen der Arbeitsspindel und der Betätigungsstange gelöst ist. Auf diese Weise ist sichergestellt, daß es nicht zu einer Fehlfunktion kommen kann, bei welcher eine Werkzeugwechselvorrichtung in Betätigung gesetzt wird und versucht, das Werkzeug zu entnehmen, bevor dieses von der Betätigungsstange entkuppelt bzw. von dieser lösbar ist. Durch diese Ausgestaltung ist somit auf besonders einfache Weise sichergestellt, daß die durchzuführenden Arbeitsschritte in der erforderlichen Reihenfolge ablaufen.

Es erweist sich auch als vorteilhaft, daß der zweite Kolben mit einer in axialer Richtung verschiebbaren Spannhülse der Werkzeugspannvorrichtung in Anlage bringbar ist. Die Werkzeugspannvorrichtung kann auf diese Weise besonders einfach betätigt werden, ohne daß zusätzliche Getriebe oder Zwischenglieder erforderlich wären. Weiterhin ist ein besonderer Vorteil dadurch gegeben, daß die Spannhülse mittels einer Federanordnung in Spannstellung in Richtung auf den zweiten Kolben vorgespannt ist. Auf diese Weise ist sichergestellt, daß wenn der zweite Kolben sich in seiner Ausgangsstellung befindet, die Werkzeugspannvorrichtung stets zur sicheren Spannung des Werkzeugs dient. Weiterhin ist es bei dieser Ausgestaltung nicht erforderlich, daß eine weitere Kraftbeaufschlagungsvorrichtung verwendet wird, welche zur Betätigung der Werkzeugspannvorrichtung dient und welche möglicherweise in ihrem Betriebsablauf zusätzlich überwacht werden müßte.

Eine günstige Ausgestaltung ist auch dadurch gegeben, daß in einer zentrischen Ausnehmung der Spannhülse mehrere, durch axiale Verschiebung der Spannhülse in radialer Richtung bewegbare, mit einem Flansch des Werkzeugs in hintergreifenden Eingriff bringbare Spannelemente vorgesehen sind. Eine derartige Ausgestaltung ermöglicht eine besonders einfache und betriebssichere Spannung des Werkzeuges und stellt sicher, daß bei einer Verschiebung der Spannhülse durch Druckbeaufschlagung durch den zweiten Kolben oder durch die Federanordnung eine sichere Betätigung der Spannelemente und eine Bewegung in hintergreifenden Eingriff mit dem Flansch bzw. von diesem weg sichergestellt wird.

Eine weitere vorteilhafte Weiterentwicklung der erfindungsgemäßen hydraulischen Betätigungsvorrichtung besteht darin, daß durch Druckbeaufschlagung der dritten Arbeitskammer der zweite Kolben in Anlage an den ersten Kolben bringbar und zusammen mit diesem in die Ausgangslage zurückverschiebbar ist. Es ist somit mittels eines einzigen Steuervorgangs, nämlich mittels einer Druckbeaufschlagung der dritten Arbeitskammer möglich, beide Kolben in sicherer Weise in ihre Ausgangsstellung oder Ausgangsposition zurückzubewegen. Dadurch wird sichergestellt, daß sowohl die Spannvorrichtung als auch die drehfeste Kupplung zwischen der Arbeitsspindel und der Betätigungsstange sich in einem betriebsbereiten Zustand befinden.

Hinsichtlich des Verfahrens wird die Aufgabe erfindungsgemäß dadurch gelöst, daß bei Stillstand der Arbeitsspindel eine drehfeste Verbindungs zwischen der Arbeitsspindel und einer koaxial in der Arbeitsspindel angeordneten Betätigungsstange für eine radiale Einstellung eines Schneidkörpers des Werkzeugs gelöst wird und die Betätigungsstange drehfest mit einem Gehäuse gekuppelt wird, daß anschließend die Arbeitsspindel zur Entkupplung des Werkzeugs von der Betätigungsstange um einen vorgegebenen Betrag verdreht wird und daß dann die Spannvorrichtung gelöst wird. Unter Verwendung der obenbeschriebenen erfindungsgemäßen Betätigungsvorrichtung ist es möglich, diese Arbeitsschritte gemäß diesem erfindungsgemäßen Verfahren nacheinander auszuführen. Es erweist sich dabei als vorteilhaft, daß sowohl eine drehfeste Fixierung der Betätigungsstange als auch eine Lösung der drehfesten Kupplung zwischen der Betätigungsstange und der Arbeitsspindel in sicherer Weise erfolgen können. Das anschließende Drehen der Arbeitsspindel um einen vorgegebenen Winkelbetrag kann durch Betätigung des zur Drehung der Arbeitsspindel beim Betrieb dienenden Schrittmotors erfolgen, wobei es nicht erforderlich ist, eine zusätzliche Antriebseinrichtung vorzusehen. Dadurch, daß die Lösung der Werkzeugspannvorrichtung erst dann erfolgt, wenn die Betätigungsstange von dem Werkzeug entkuppelt ist, ist sichergestellt, daß vermieden wird, daß eine Werkzeugwechselvorrichtung versucht, das Werkzeug zu entnehmen, solange dieses noch mit der Betätigungsstange verbunden ist.

Ein Wiederverbinden eines neu eingesetzten Werkzeugs mit der Betätigungsstange und ein Spannen des Werkzeugs mit der Arbeitsspindel erfolgt erfindungsgemäß in umgekehrter Reihenfolge, wobei dadurch, daß das Werkzeug zuerst mit der Arbeitsspindel verbunden und zu dieser verspannt wird, sichergestellt ist, daß das Werkzeug in richtiger Weise in die Arbeitsspindel eingesetzt und zu dieser zentriert ist, bevor eine Verbindung mit der koaxial in der Arbeitsspindel angeordneten Betätigungsstange erfolgt. Auf diese Weise wird vermieden, daß die Verbindungsvorrichtung oder Kupplung zwischen dem Werkzeug und der Arbeitsspindel durch eine falsche Lage des Werkzeugs beschädigt werden kann.

Die erfindungsgemäße hydraulische Betätigungsvorrichtung ist nicht auf den in den Unteransprüchen beschriebenen Verwendungszweck beschränkt, es ist vielmehr möglich, beliebige Betätigungsschritte unter Verwendung dieser Betätigungsvorrichtung auszuführen, bei denen es darauf ankommt, sicherzustellen, daß zwei Arbeitsschritte nacheinander durchgeführt werden, wobei sichergestellt werden muß, daß die richtige Reihenfolge der Arbeitsschritte unter allen Umständen beibehalten wird. Im Rahmen der Erfindung ist die Betätigungsvorrichtung auch nicht auf die Verwendung von zwei Kolben beschränkt, es ist vielmehr auch möglich, drei oder mehrere Kolben koaxial zueinander anzuordnen und somit eine geordnete Verschiebung in mehreren Stufen vorzunehmen.

Unter Verwendung der erfindungsgemäßen Betätigungsvorrichtung ist es möglich, die verschiedensten Arten und Ausführungsformen von Werkzeugen in automatischer Weise zu spannen bzw. zu wechseln. Insbesondere können dabei Feindrehköpfe, Feinbohrwerkzeuge, Schieberwerkzeuge, Plandrehköpfe oder sonstige Sonderwerkzeuge zum Einsatz gelangen.

Im folgenden wird die Erfindung anhand eines Ausführungsbeispiels in Verbindung mit der Zeichnung beschrieben. Dabei zeigt:

Fig. 1 eine Schnittansicht der erfindungsgemäßen hydraulischen Betätigungsvorrichtung und eines Teils einer Arbeitsspindel,

Fig. 2 eine Schnittansicht des werkzeugseitigen Bereichs der Arbeitsspindel und

Fig. 3 eine Schnittansicht der Verbindungsstelle zwischen einer Betätigungsstange und einem Werkzeug.

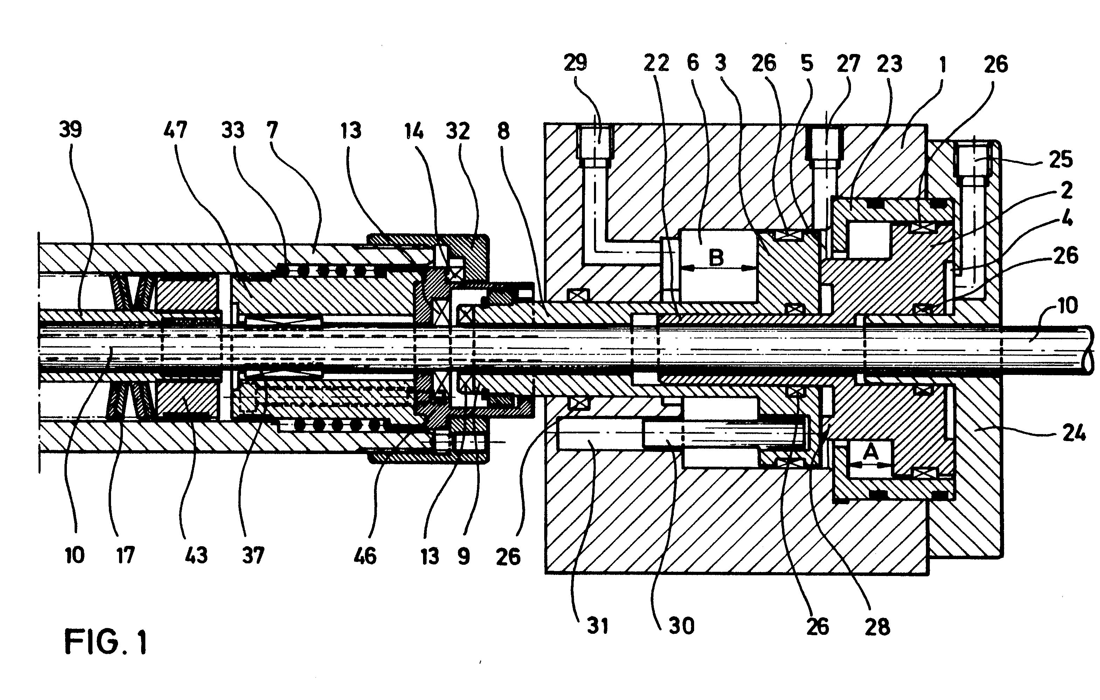

Figur 1 zeigt in ihrem rechten Teil einen Längsschnitt durch ein Ausführungsbeispiel der erfindungsgemäßen hydraulischen Betätigungsvorrichtung. Diese weist ein Gehäuse 1 auf, in welchem ein erster Kolben 2 verschiebbar gelagert ist. Das Gehäuse 1 weist eine fest mit diesem verbundene Zylinderbuchse 23 auf, welche der Führung des ersten Kolbens 2 dient. An der in Fig. 1 rechts dargestellten Seite des Gehäuses 1 ist ein Deckel 24 vorgesehen, welcher zusammen mit dem ersten Kolben 2 eine erste Arbeitskammer 4 ausbildet. Die erste Arbeitskammer 4 ist über einen Anschlußkanal 25 mit einer nicht dargestellten Hydraulikflüssigkeitsversorgung verbunden. An dem in Fig. 1 nach links weisenden Endbereich weist der erste Kolben 2 eine Kolbenstange 22 auf, welche rohrförmig ausgebildet ist und welche der Lagerung eines zweiten Kolbens 3 dient. Der zweite Kolben 3 ist, ebenso wie der erste Kolben 2 drehrund ausgebildet und wird in einer Zyolinderausnehmung des Gehäuses 1 geführt. Sowohl der erste Kolben als auch der zweite Kolben weisen an ihrem Außenumfang und an ihrem Innenumfang jeweils eine Dichtung 26 auf, welche der Abdichtung der jeweiligen Arbeitskammern dient. Zwischen dem ersten Kolben 2 und dem zweiten Kolben 3 ist eine zweite Arbeitskammer 5 ausgebildet, welche über einen Anschlußkanal 27 mit einer nicht dargestellten Hydraulikflüssigkeitsversorgung verbunden ist. Eine Steuerung der Druckbeaufschlagung der Arbeitskammern 4 und 5 erfolgt mittels nicht dargestellter Ventileinrichtungen. An dem in Fig. 1 nach links weisenden Endbereich des zweiten Kolbens 3 ist eine dritte Arbeitskammer 6 vorgesehen, welche von dem Gehäuse 1 und dem zweiten Kolben 3 ausgebildet wird. Die dritte Arbeitskammer 6 ist mit einem Anschlußkanal 29 verbunden, der über eine Ventileinrichtung mit einer nicht dargestellten Hydraulikversorgungseinrichtung verbunden ist. An dem nach links weisenden Endbereich des zweiten Kolbens 3 ist eine rohrförmige Kolbenstange 8 vorgesehen, welche einstückig mit dem zweiten Kolben 3 verbunden ist und in einer Zylinderausnehmung des Gehäuses 1 geführt ist, wobei die Kolbenstange 8 gegenüber dem Gehäuse 1 mittels einer Dichtung 26 abgedichtet ist. Die Kolbenstange 8 ist in ihrem Inneren mit einer zylindrischen Ausnehmung versehen, in welcher die Kolbenstange 22 des ersten Kolbens 2 verschiebbar angeordnet ist und durch welche sich eine koaxial zu dem ersten Kolben 2 und dem zweiten Kolben 3 angeordnete Betätigungsstange 10 erstreckt. Auch die Kolbenstange 22 des ersten Kolbens 2 ist mit einer zentrischen zylindrischen Ausnehmung versehen, ebenso wie der Deckel 24.

Das Gehäuse 1 und die beiden Kolben 2, 3 sind so dimensioniert, daß der erste Kolben 2 einen Verschiebeweg A aufweist, um welchen er bei Druckbeaufschlagung der ersten Arbeitskammer 4 verschiebbar ist. Bei einer Druckbeaufschlagung der zweiten Arbeitskammer 5 ist der zweite Kolben 3 um einen Verschiebeweg B verschiebbar.

Weiterhin weist der erste Kolben 2 an seiner dem zweiten Kolben 3 zugewandten Seite einen Anschlagring 28 auf, welcher sich in der in Fig. 1 dargestellten Position der beiden Kolben 2, 3, welche der Ausgangsposition entspricht, in Anlage an den zweiten Kolben 3 befindet. Bei einer Druckbeaufschlagung der ersten Arbeitskammer 4 wird somit der erste Kolben 2 um den Verschiebeweg A nach links verschoben, wobei dies durch die Anlage des Anschlagrings 28 an dem zweiten Kolben 3 auch zu einer Verschiebung des zweiten Kolbens 3 um den Verschiebeweg A nach links führt. Bei einer nachfolgenden Druckbeaufschlagung der zweiten Arbeitskammer 5 wird der zweite Kolben 3 weiter nach links verschoben, wobei er, bezüglich seiner in Fig. 1 dargestellten Ausgangsposition insbesamt um den Verschiebeweg B verschiebbar ist.

Durch eine Druckbeaufschlagung der dritten Arbeitskammer 6 wird der zweite Kolben 3 nach rechts verschoben (Fig. 1),wobei er dabei in Anlage an den Anschlagring 28 der ersten Kolbens 2 gebracht wird, so daß auch dieser nach rechts in die in Fig. 1 dargestellte Ausgangsposition verschoben wird.

Der zweite Kolben 3 weist einen fest mit diesem verbundenen Bolzen 30 auf, welcher parallel zur Drehachse der Betätigungsstange 10 angeordnet ist und in einer Ausnehmung 31 des Gehäuses 1 verschiebbar ist. Mittels des Bolzens 30 und der Ausnehmung 31 wird der zweite Kolben 3 drehfest in dem Gehäuse 1 gelagert.

Das freie Ende 9 der Kolbenstange 8 des zweiten Kolbens 3 ist mit einer Klauenkupplung 13 versehen. Das freie Ende 9 der Kolbenstange 8 und die dort angeordnete Klauenkupplung 13 ragen frei aus dem Gehäuse 1 vor.

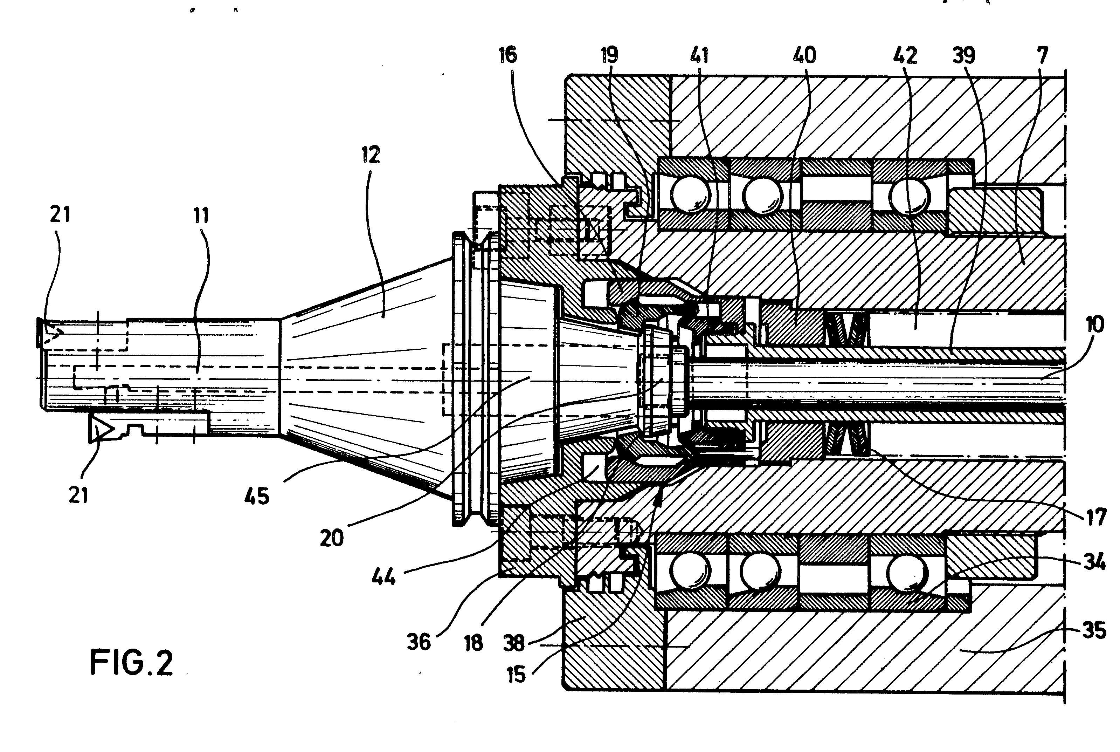

Der linke Bereich der Fig. 1 und Fig. 2 zeigen eine Arbeitsspindel 7 einer Werkzeugmaschine, welche mittels einer in Fig. 2 nur vereinfacht dargestellten Lagerung 34 in einem Gehäuse 35 drehbar gelagert ist. Die Ausgestaltung der Lagerung 34, deren Vorspannung mittels einer Lagerplatte 38 und die Abdichtung zur Umgebung hin werden im einzelnen nicht beschrieben, da diese dem Stand der Technik entsprechen. Die Arbeitsspindel 7 ist rohrförmig ausgebildet und weist in ihrem Inneren eine zylindrische Ausnehmung auf, durch welche sich die betätigte Stange 10 erstreckt. An dem in Fig. 2 dargestellten linken Endbereich ist an der Arbeitsspindel 7 ein Werkzeug 12 angeordnet, wobei dieses mittels einer im einzelnen noch zu beschreibenden Werkzeugspannvorrichtung 15 an der Arbeitsspindel 7 befestigt ist. Das Werkzeug 12 weist eine nur schematisch dargestellte Schneidenverstelleinrichtung 11 auf, welche der radialen Verstellung von am Werkzeug 12 gelagerten Schneidkörpern 21 dient. Die Schneidenverstelleinrichtung 11 ist in bekannter Weise so ausgeführt, daß durch Verschiebung der mit ihr mittels einer Kupplung 20 verbundenen Betätigungsstange 10 in axialer Richtung über eine Keil- oder Hebelvorrichtung die Schneidkörper 21 in radialer Weise verschoben oder verschwenkt werden können.

Die Werkzeugspannvorrichtung 15 umfaßt eine rohrförmige Spannhülse 16, welche in axialer Richtung um einen bestimmten Betrag verschiebbar ist. Zum Zwecke dieser axialen Verschiebung ist die Spannhülse 16 fest mit einer rohrförmigen Betätigungsstange 39 verbunden, welche sich koaxial zu der Arbeitsspindel 7 erstreckt und sich beim Betrieb der Werkzeugmaschine mit dieser in Drehung befindet. Die Spannhülse 16 weist, wie in Fig. 2 dargestellt, einen dem Werkzeug zugewandten Endbereich auf, welcher sich in Anlage an ein im Endbereich eines Spannelements 19 befindet. Bei dem gezeigten Ausführungsbeispiel sind umfangsmäßig angeordnet mehrere Spannelemente 19 vorgesehen, beispielsweise sechs, sieben oder acht Stück. Durch eine axiale Verschiebung der Spannhülse 16 wird eine radiale Bewegung oder Verschwenkung der Spannelemente 19 hervorgerufen. Bei dem in Fig. 2 dargestellten Betriebszustand befinden sich die Spannelemente 19 in der Spannposition, in welcher sie sich in hintergreifender Anlage gegen einen Flansch 18 befinden, welcher am Endbereich des Werkzeugs 12 ausgebildet ist. Fest mit der Spannhülse 16 verbunden ist ein Ring 41, welcher einen ringförmigen Zwischenraum mit der Spannhülse 16 ausbildet, in welchem ein Endbereich jedes der Spannelemente 19 derart gelagert ist, daß die Spannelemente 19 um diesen Endbereich schwenkbar sind. Der Ring 41 ist weiterhin so dimensioniert, daß bei einer Verschiebung der Betätigungsstange 39 und der mit dieser verbundenen Spannhülse 16 und dem ebenfalls mit der Betätigungsstange verbundenen Ring 41 eine Anlage gegen einen abgeschrägten Bereich jedes der Spannelemente 19 erfolgt, wodurch diese in radialer Richtung nach außen verschwenkt werden und außer Eingriff von dem Flansch 18 des Werkzeugs 12 kommen. Somit ist das Werkzeug 12 in dem in Fig. 2 gezeigten Zustand, in welchem die Betätigungsstange 39 nach rechts verschoben ist, gespannt, während bei einer Verschiebung der Betätigungsstange 39 nach links die Spannelemente sich von dem Flansch 18 entfernen und das Werkzeug somit aus der Arbeitsspindel 7 entnehmbar ist.

Ein Anschlag 40, welcher ringförmig ausgebildet ist, ist fest mit der Arbeitsspindel 7 verbunden und bildet die gemäß Fig. 2 linke Begrenzung eines zylindrischen Raumes 42, in welchem eine Federanordnung 17 angeordnet ist, die der Vorspannung der Betätigungsstange 39 nach rechts dient. Zu diesem Zweck weist die Betätigungsstange 39 einen Anschlagring 43 auf, welcher an ihrem der hydraulischen Betätigungsvorrichtung zugewandten Endbereich fest mit der Betätigungsstange 39 verbunden ist (siehe Fig. 1). Mittels der Federanordnung 17 ist somit stets eine sichere Spannung des Werkzeugs 12 sichergestellt.

Die Arbeitsspindel 7 weist an ihrem dem Werkzeug zugewandten Endbereich eine Frontplatte 36 auf, welche fest mit der Arbeitsspindel 7 verbunden ist und welche eine zentrische Ausnehmung aufweist, die bei dem in Fig.2 dargestellten Ausführungsbeispiel einen Kegelsitz zur Aufnahme des Werkzeugs 12 bildet. Es wäre ebensogut möglich, die Ausnehmung in Form eines zylindrischen Sitzes auszubilden. Durch diesen Kegelsitz ist das Werk zeug relativ zur Arbeitsspindel 7 zentriert. Weiterhin weist die Frontplatte 36 eine Ringnut 44 auf, welche der Führung der Spannhülse 16 und der Begrenzung des axialen Verschiebewegs der Spannhülse 16 dient.

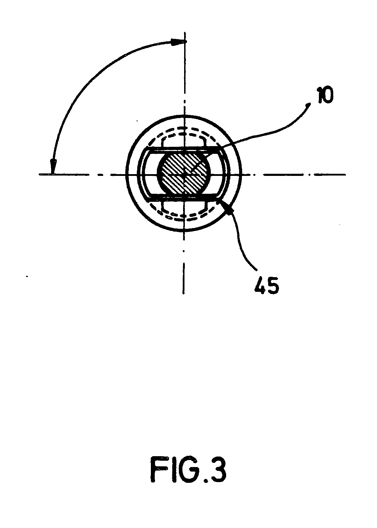

Die Betätigungsstange 10 ist mit der Schneidenverstelleinrichtung 11 mittels einer Kupplung 20 verbunden, welche in Fig. 3 näher dargestellt ist. Die Betätigungsstange 10 weist an ihrem Endbereich eine nicht mit Bezugszeichen versehene Ringnut auf, welche in einem axialen Abstand zu der Endfläche der Betätigungsstange 10 ausgebildet ist. Das zwischen der Endfläche und der Ringnut angeordnete Ende der Betätigungsstange 10 ist, wie in Fig. 3 dargestellt, abgeflacht ausgebildet. Analog dazu weist die Schneidenverstelleinrichtung 11 eine axial verschiebbare Spindel 45 auf, welche mit einer Ausnehmung versehen ist, die komplementär zu dem Endbereich der Betätigungsstange 10 ausgebildet ist. Demzufolge weist die Spindel 45 an ihrer Endfläche eine schlitzartige Ausnehmung auf, welche in einen zylindrischen Ringraum übergeht. Es ist somit möglich, die Betätigungsstange 10 in einer definierten Winkellage relativ zu der Spindel 45 in diese einzuführen, wobei eine anschließende Verdrehung um 90 Grad, wie in Fig. 3 angedeutet, zu einer Verriegelung des Endbereichs der Betätigungsstange 10 in der Spindel 45 führt. Eine axiale Verschiebung der Betätigungsstange 10 führt somit auch zu einer axialen Verschiebung der Spindel 45, wodurch die Schneidenverstelleinrichtung 11 extern betätigbar ist. Beim Betrieb der Werkzeugmaschine dreht sich das Werkzeug 12 zusammen mit der Arbeitsspindel 7, der Betätigungsstange 10 und der Betätigungsstange 39 mit derselben Drehgeschwindigkeit.

Wie in Fig. 1 dargestellt, weist der der Betätigungsvorrichtung zugewandte Endbereich der Arbeitsspindel 7 eine fest mit dieser verbundene Endkappe 32 auf, welche mit einer kreisförmigen zentralen Ausnehmung versehen ist. An ihrem Innenumfang weist die Endkappe 32 eine Kupplung 14 auf, welche bei dem bezeigten Ausführungsbeispiel in Form einer Klauenkupplung ausgebildet ist. Der zugehörige zweite Teil dieser Kupplung 14 ist am Außenumfang eines Kupplungsrings 46 ausgebildet, welcher fest mit einem Führungsring 47 verbunden ist. Dieser wiederum ist mittels einer Nut- und Keilverbindung 37 drehfest mit der Betätigungsspindel 10 verbunden, jedoch in axialer Richtung relativ zu dieser verschiebbar.

Der Kupplungsring 46 weist, ebenso wie der Führungsring 47 eine zentrische, runde Ausnehmung zur Durchführung der Betätigungsstange 10 auf. Im Bereich des Innenumfanges ist der Kupplungsring 46 mit einer Klauenkupplung 13 versehen, welche das Gegenstück zu der am freien Ende 9 der Kolbenstange 8 ausgebildeten Klauenkupplung 13 bildet.

Der Führungsring 47 ist mittels einer Federeinrichtung 33, welche zum einen gegen den Führungsring 47 und zum anderen gegen die Arbeitsspindel 7 anliegt, in Richtung auf die Betätigungsvorrichtung vorgespannt. Das der Betätigungsvorrichtung abgewandte Ende des Führungsring 47 ist in einem Abstand zu dem Anschlagring 43 angeordnet, welcher fest mit der Betätigungsstange 39 verbunden ist.

Im folgenden wird die Betriebsweise der erfindungsgemäßen hydraulischen Betätigungsvorrichtung und der Kupplungs- und Spannvorrichtung gemäß dem in den Fig. 1 bis 3 gezeigten Ausführungsbeispiel beschrieben.

Eine Druckbeaufschlagung der ersten Arbeitskammer 4 führt zu einer Verschiebung des ersten Kolbens 2 und des zweiten Kolbens 3 um den Verschiebeweg A. Durch diese Verschiebung wird die Klauenkupplung 13 zwischen der Kolbenstange 8 und dem Kupplungsring 46 in Eingriff gebracht. Dies führt zu einer drehfesten Verbindung zwischen der Kolbenstange 8, dem Kupplungsring 46, dem Führungsring 47 und der Betätigungsstange 10. Da der zweite Kolben 3 drehfest in dem feststehenden Gehäuse gelagert ist, wird somit die Betätigungsstange 10 relativ zu dem Gehäuse 1 drehfest. Es braucht nicht erwähnt zu werden, daß dieser Vorgang nur dann erfolgt, wenn die Arbeitsspindel 7, die Betätigungsstange 10 und die Betätigungsstange 39 stillstehen und sich nicht in Drehung befinden.

Zugleich führt die Verschiebung des ersten und des zweiten Kolbens und der Kolbenstange 8 zu einem Ausrücken der Kupplung 14 zwischen der Kolbenstange 8 und der Betätigungsstange 10. Es ist somit möglich, die Arbeitsspindel 7 relativ zu der Betätigungsstange 10 zu verdrehen. Wenn sich die Kolben 2, 3 in der in Fig. 1 dargestellten Ruhelage befinden, wird der Führungsring 47 und der mit diesem verbundene Kupplungsring 46 durch Einwirkung der Federeinrichtung 33 nach rechts vor gespannt, wodurch die Kupplung 14 sich in Eingriff befindet. Dies wiederum führt zu einer drehfesten Kupplung zwischen der Betätigungsstange 10 und der Arbeitsspindel 7. Während des Betriebs der Werkzeugmaschine und bei nicht betätigter Betätigungsvorrichtung drehen sich somit die Arbeitsspindel 7 und die Betätigungsstange 10 mit derselben Drehzahl.

Nachdem durch die Verschiebung des ersten Kolbens 2 um den Verschiebeweg A zum einen die Betätigungsstange 10 drehfest fixiert wurde und zum anderen die Arbeitsspindel 7 so entkuppelt wurde, daß diese relativ zu der Betätigungsstange 10 verdrehbar ist, ist es möglich, mittels eines Schrittmotors (nicht dargestellt), welcher dem Antrieb der Arbeitsspindel 7 dient, diese um den in Fig. 3 dargestellten Winkelbetrag von 90 Grad zu verdrehen. Auf diese Weise erfolgt die in Fig. 3 dargestellte Ausrichtung der Endbereiche der Spindel 45 des Werkzeugs 12 und der Betätigungsstange 10. Es wäre somit möglich, das Werkzeug 12 durch Bewegung in axialer Richtung nach links von der Betätigungsstange 10 abzuziehen.

Eine nachfolgende Druckbeaufschlagung der zweiten Arbeitskammer 5 führt zu einer weiteren Verschiebung des zweiten Kolbens 3 nach links, so daß dieser insgesamt um den Verschiebeweg B verschoben wurde. Da das freie Ende 9 der Kolbenstange 8 sich bereits in Anlage an dem Kupplungsring 46 befindet (durch Verschiebung des ersten Kolbens 2 um den Verschiebeweg A), führt eine weitere Verschiebung des zweiten Kolbens 3 zu einer Annäherung und nachfolgend zur Anlage des Führungsrings 47 gegen den Anschlagring 43. Da der Anschlagring 43 fest mit der Betätigungsstange 39 verbunden ist, führt eine restliche Verschiebung des zweiten Kolbens 3 zu einer Verschiebung der Betätigungsstange 39 und damit auch der Spannhülse 16 und dem Ring 41. Durch diese Verschiebung werden die Spannelemente 19 radial nach außen verschwenkt, so daß sie sich nicht mehr in Eingriff mit dem Flansch 18 des Werkzeugs 12 befinden. Das Werkzeug 12 kann nunmehr durch eine Werkzeugwechselvorrichtung in axialer Richtung nach links abgezogen werden.

Bei einem Einsetzen des Werkzeuges erfolgen die obenbeschriebenen Arbeitsschritte in umgekehrter Reihenfolge. Nachdem das Werkzeug 12 eingesetzt wurde, wird die dritte Arbeitskammer 6 mit Druck beaufschlagt, wodurch der zweite Kolben 3 nach rechts verschoben wird. Dies führt zu einer Bewegung der Betätigungsstange 39, der Spannhülse 16 und des Rings 41 nach rechts, wobei diese Bewegung durch die Federanordnung 17 hervorgerufen wird. Auf diese Weise erfolgt ein Spannen des Werkzeugs durch die Spannelemente 19. Zur Durchführung dieses Spannvorganges wird, wie bereits erwähnt, die dritte Arbeitskammer 6 mit Druck beaufschlagt, während die zweite Arbeitskammer 5 druckentlastet wird. Um zu verhindern, daß die Kupplung 14 zwischen der Arbeitsspindel 7 und der Betätigungsstange 10 bereits zu diesem Zeitpunkt eingerückt wird, wird zu diesem Zeitpunkt die Druckbeaufschlagung der ersten Arbeitskammer 4 beibehalten. Der zweite Kolben 3 kann somit nur um einen Teilbetrag seines Verschiebeweges B nach rechts verschoben werden. Nachdem der Spannvorgang mittels der Krafteinwirkung der Federanordnung 17 erfolgt ist, wird die Arbeitsspindel 7 zusammen mit dem Werkzeug 12 um 90 Grad relativ zu der Betätigungsstange 10 verdreht, wobei durch diese Verdrehung die Kupplung 20 eingerückt wird.

Anschließend wird die erste Arbeitskammer 4 druckentlastet, so daß der zweite Kolben 3 unter Mitnahme des ersten Kolbens 2 restlich nach rechts verschoben wird (Fig. 1), wodurch beide Kolben 2, 3 sich wieder in ihrer Ausgangsposition befinden. Durch die Bewegung der Kolbenstange 8 nach rechts erfolgt eine Lösung der Klauenkupplung 13 und ein Einrücken der Kupplung 14, wodurch die Betätigungsstange 10 wieder drehfest mit der Arbeitsspindel 7 verbunden ist. Zugleich ist die drehfeste Fixierung der Betätigungsstange 10 durch Ausrücken der Klauenkupplung 13 aufgehoben.

## Ansprüche

1. Hydraulische Betätigungsvorrichtung, insbesondere zur Betätigung einer Kupplungs- und Spannvorrichtung für die lösbare Verbindung eines Werkzeugs mit einer Arbeitsspindel, **gekennzeichnet** durch einen ersten (2) und einen zweiten (3) koaxial zueinander in einem Gehäuse (1) verschiebbar angeordneten Kolben, eine erste (4) zwischen dem ersten Kolben (2) und dem Gehäuse (1) ausgebildete Arbeitskammer, eine zweite (5) zwischen dem ersten (2) und dem zweiten (3) Kolben in dem Gehäuse (1) ausgebildete Arbeitskammer und eine dritte (6) zwischen dem zweiten Kolben (3) und dem Gehäuse (1) ausgebildete Arbeitskammer, wobei die Arbeitskammern (4, 5, 6) gegeneinander druckdicht abgedichtet sind, wobei der erste Kolben (2) einen geringeren Verschiebeweg (A) als der zweite Kolben (3) aufweist und wobei der erste Kolben (2) bei dessen Verschiebung durch Druckbeaufschlagung der ersten Arbeitskammer (4) zur Verschiebung des zweiten Kolbens (3) an diesen in Anlage bringbar ist.

2. Betätigungsvorrichtung nach Anspruch 1, dadurch gekennzeichnet, daß der erste (2) und der zweite (3) Kolben koaxial zur Drehachse der Arbeitsspindel (7) angeordnet sind.

3. Betätigungsvorrichtung nach Anspruch 2, dadurch gekennzeichnet, daß der zweite (3) Kolben drehfest in dem Gehäuse (1) gelagert und mit einer Kolbenstange (8) verbunden ist, deren freies Ende (9) durch Verschieben des ersten Kolbens (2) aus einer Ausgangslage des ersten (2) und des zweiten (3) Kolbens drehfest mit einer koaxial im Innern der Arbeitsspindel (7) angeordneten Betätigungsstange (10) für eine Schneidenverstelleinrichtung (11) des Werkzeugs (12) kuppelbar ist.

4. Betätigungsvorrichtung nach Anspruch 3, dadurch gekennzeichnet, daß zum Kuppeln eine Klauenkupplung (13) vorgesehen ist.

5. Betätigungsvorrichtung nach einem der Ansprüche 3 oder 4, dadurch gekennzeichnet, daß durch Verschieben des ersten Kolbens (2) eine drehfeste Kupplung (14) zwischen der Arbeitsspindel (7) und der Betätigungsstange (10) lösbar ist.

6. Betätigungsvorrichtung nach Anspruch 5, dadurch gekennzeichnet, daß die Kupplung (14) in Form einer Klauenkupplung ausgebildet ist.

7. Betätigungsvorrichtung nach einem der Ansprüche 3 bis 6, dadurch gekennzeichnet, daß bei Druckbeaufschlagung der zweiten Arbeitskammer (5) der zweite Kolben (3) zum Lösen einer Werkzeugspannvorrichtung (15) verschiebbar ist.

8. Betätigungsvorrichtung nach Anspruch 7, dadurch gekennzeichnet, daß der zweite Kolben (3) mit einer in axialer Richtung verschiebbaren Spannhülse (16) der Werkzeugspannvorrichtung (15) in Anlage bringbar ist.

9. Betätigungsvorrichtung nach Anspruch 8, dadurch gekennzeichnet, daß die Spannhülse (16) mittels einer Federanordnung (17) in Spann stellung in Richtung auf den zweiten Kolben (3) vorgespannt ist.

10. Betätigungsvorrichtung nach einem der Ansprüche 8 oder 9, dadurch gekennzeichnet, daß in einer zentrischen Ausnehmung der Spannhülse (16) mehrere, durch axiale Verschiebung der Spannhülse (16) in radialer Richtung bewegbare, mit einem Flansch (18) des Werkzeugs (12) in hintergreifenden Eingriff bringbare Spannelemente (19) vorgesehen sind.

11. Betätigungsvorrichtung nach einem der Ansprüche 1 bis 10, dadurch gekennzeichnet, daß durch Druckbeaufschlagung der dritten Arbeitskammer (6) der zweite Kolben (3) in Anlage an den ersten Kolben (2) bringbar und zusammen mit diesem in die Ausgangslage zurückverschiebbar ist.

12. Betätigungsvorrichtung nach einem der Ansprüche 3 bis 11, dadurch gekennzeichnet, daß das Werkzeug (12) der Betätigungsstange (10) mittels einer durch eine Relativverdrehung zwischen Werkzeug (12) und Betätigungsstange (10) in formschlüssigen Eingriff bringbare Kupplung (20) verbindbar ist.

13. Verfahren zur Betätigung einer Kupplungs- und Spannvorrichtung für die lösbare Verbindung eines Werkzeugs mit einer Arbeitsspindel, insbesondere unter Verwendung der Betätigungsvorrichtung nach einem der Ansprüche 1 bis 12,
dadurch **gekennzeichnet,**
daß bei Stillstand der Arbeitsspindel (7) eine drehfeste Verbindung zwischen der Arbeitsspindel (7) und einer koaxial in der Arbeitsspindel (7) angeordneten Betätigungsstange (10) für eine radiale Einstellung eines Schneidkörpers (21) des Werkzeugs (12) gelöst wird und die Betätigungsstange (10) drehfest mit einem Gehäuse (1) gekuppelt wird, daß anschließend die Arbeitsspindel (7) zur Entkupplung des Werkzeugs (12) von der Betätigungsstange (10) um einen vorgegebenen Betrag verdreht wird und daß dann die Spannvorrichtung (15) gelöst wird.

FIG. 1

FIG.2

0 292 022

FIG.3